# EUROPÄISCHE PATENTSCHRIFT

(11) **EP 3 742 241 B1**
(45) Veröffentlichungstag und Bekanntmachung des Hinweises auf die Patenterteilung: **29.09.2021**
(21) Anmeldenummer: 19176343.2
(22) Anmeldetag: 24.05.2019
(51) Int. Cl.: G05B 19/042

(54) **VERFAHREN ZUR KONFIGURATION ZUMINDEST EINES GERÄTS EINER INDUSTRIELLEN MASCHINE**
METHOD FOR CONFIGURING AT LEAST ONE DEVICE OF AN INDUSTRIAL MACHINE
PROCÉDÉ DE CONFIGURATION D'AU MOINS UN APPAREIL D'UNE MACHINE INDUSTRIELLE

(43) Veröffentlichungstag der Anmeldung: 25.11.2020
(73) Patentinhaber: SICK AG, 79183 Waldkirch (DE)
(72) Erfinder: Fecher, Harald, 79111 Freiburg (DE); Ketterer, Stefan, 79294 Sölden (DE); Wehrle, Martin, 79111 Freiburg (DE); Ziegenmeyer, Marco, 79238 Ehrenkirchen, OT Kirchhofen (DE)
(74) Vertreter: Manitz Finsterwald Patent- und Rechtsanwaltspartnerschaft mbB

(56) Entgegenhaltungen:
- EP-A1- 1 624 351
- EP-A1- 3 410 240
- EP-A2- 2 645 190
- US-A1- 2013 116 804

## Beschreibung

Die vorliegende Erfindung betrifft ein Verfahren zur Konfiguration zumindest eines Geräts einer industriellen Maschine, wobei die Maschine mehrere separate Geräte, beispielsweise Feldgeräte, speicherprogrammierbare Steuerungen (SPS) und/oder Feldbusse, umfasst.

Aus der EP 3 410 240 A1 ist ein Verfahren zum Konfigurieren eines neuen Geräts einer Maschine bekannt, wobei Konfigurationsinformationen eines bisherigen Geräts auf das neue Gerät kopiert werden.

Heutige industrielle Prozesse werden häufig von industriellen Maschinen durchgeführt, die mehrere separate Geräte umfassen. Solche Geräte können Steuerungen, Aktoren und Sensoren sein. Die Geräte wirken zusammen, um die Funktion der industriellen Maschine zu erfüllen. Durch die industrielle Maschine kann beispielsweise die Bearbeitung von Werkstücken, das Sortieren von Paketen und dergleichen erfolgen.

Mit zunehmender Vernetzung von Steuerungen, Sensoren und Aktoren innerhalb der Maschine hängen die Gerätekonfigurationen der einzelnen Geräte immer stärker voneinander ab. Dies hat zur Folge, dass insbesondere im Service- oder Support-Fall ein aufwändiges Auslesen der Konfiguration von vielen Einzelgeräten notwendig ist, um eine korrekte Konfigurationsänderung eines einzelnen Geräts durchzuführen.

Als Alternative zum Auslesen vieler oder sämtlicher Geräteparameter ist es bekannt, reine Einzelgerätekonfigurationen zu verwenden, bei welchen jedes Gerät seine eigene Projektdatei/Gerätekonfigurationsdatei besitzt. Hierbei ist nachteilig, dass der Anwender gezwungen wird, bestimmte Werte zur Konfiguration verschiedener Geräte mehrfach einzugeben. Zudem muss manuell dafür gesorgt werden, dass alle Werte der Gerätekonfigurationen konsistent und auf dem neuesten Stand sind.

Da in der Praxis im Service- oder Support-Fall die Projektdatei häufig nicht verfügbar ist, muss in diesen Fällen dann trotzdem das aufwändige Auslesen der Konfiguration von vielen Einzelgeräten erfolgen.

Es ist daher die der Erfindung zugrundeliegende Aufgabe, ein Verfahren zur Konfiguration einer Maschine anzugeben, welches die Konfiguration der Maschine und insbesondere die Neu-Konfiguration von einzelnen Geräten der Maschine erleichtert.

Diese Aufgabe wird durch ein Verfahren gemäß Anspruch 1 gelöst.

In dem erfindungsgemäßen Verfahren wird ein elektronisches Konfigurationssystem verwendet, wobei mittels des elektronischen Konfigurationssystems
- eine Konfiguration zumindest eines ersten Geräts ausgelesen wird,
- aus der Konfiguration des ersten Geräts auf zumindest einen Teil einer Konfiguration eines potentiellen Geräts, dessen Konfiguration nicht ausgelesen wurde, rückgeschlossen wird, wobei eine Verbindung zwischen dem ersten Gerät und dem potentiellen Gerät vorgesehen ist,
- eine Neu-Konfiguration des ersten Geräts durchgeführt wird, wobei die Konfiguration des potentiellen Geräts bei der Neu-Konfiguration berücksichtigt wird,
- die Neu-Konfiguration an die Maschine übertragen wird.

Die Erfindung macht sich die Erkenntnis zunutze, dass aus der Konfiguration des ersten Geräts Rückschlüsse auf die Konfiguration des potentiellen Geräts getroffen werden können. Die Rückschlüsse über die Konfiguration des potentiellen Geräts können dann bei der Konfiguration des ersten Geräts verwendet werden. Auf diese Weise ist es nicht notwendig, die Konfiguration des potentiellen Geräts zunächst aufwändig auszulesen. Die Erstellung einer Neu-Konfiguration für das erste Gerät wird somit vereinfacht.

Unter der Neu-Konfiguration der Maschine ist dabei die Neu-Konfiguration zumindest eines Geräts der Maschine zu verstehen. Das Gerät für welches die Neu-Konfiguration durchgeführt wird, kann insbesondere das erste Gerät sein. Es ist aber auch möglich, eine Neu-Konfiguration eines anderen Geräts durchzuführen.

Zur Erstellung der Neu-Konfiguration kann mittels des Konfigurationssystems eine neue (zunächst leere) Projektdatei verwendet werden, in welche die Konfiguration des ersten Geräts eingefügt wird. In der Projektdatei bzw. dem Projekt kann dann das potentielle Gerät angelegt werden.

Unter einem potentiellen Gerät ist dabei ein tatsächlich in der industriellen Maschine vorhandenes Gerät zu verstehen, dessen Konfiguration nicht ausgelesen wurde und/oder dessen Konfiguration nicht bekannt ist (aus welchen Gründen auch immer). Dieses Gerät wird als potentielles Gerät bezeichnet, da es zwar real existiert, für das elektronische Konfigurationssystem aber nicht tatsächlich "sichtbar" ist und dementsprechend in dem Konfigurationssystem nur "virtuell" bzw. "potentiell" existiert.

Das erste Gerät ("echtes Gerät") ist ebenfalls ein real in der industriellen Maschine vorhandenes Gerät, welches mit dem Konfigurationssystem verbunden ist, beispielsweise über einen Feldbus.

Erfindungsgemäß werden also zunächst die Geräteparameter des ersten Geräts ausgelesen, d.h. die Konfiguration des ersten Geräts wird ausgelesen. Ist nun beispielsweise aus der Konfiguration des ersten Geräts ersichtlich, dass das erste Gerät mit einem weiteren Gerät kommuniziert, so wird dieses weitere Gerät als potentielles Gerät angesehen. Aus der Zieladresse der Kommunikation des ersten Geräts (d.h. der Netzwerkadresse) und/oder aus einer Datenrate der Kommunikation des ersten Geräts kann dann auf die Netzwerkadresse und/oder eine mögliche Datenrate des potentiellen Geräts rückgeschlossen werden. Es kann damit zumindest zum Teil die Konfiguration des potentiellen Geräts, d.h. die Geräteparameter des potentiellen Geräts, ermittelt werden.

Die so ermittelten Geräteparameter des potentiellen Geräts werden dann bei der Neu-Konfiguration der Maschine und/oder der Neu-Konfiguration des ersten Geräts berücksichtigt. Beispielsweise kann eine Überprüfung der bei der Neu-Konfiguration geänderten Geräteparameter z.B. des ersten Geräts durchgeführt werden.

Unter der Neu-Konfiguration ist dementsprechend insbesondere die Veränderung von Geräteparametern eines Geräts der industriellen Maschine zu verstehen.

Nach der Durchführung der Neu-Konfiguration wird die Neu-Konfiguration an die Maschine bzw. an das entsprechende Gerät der Maschine übertragen, wobei die Neu-Konfiguration dann für den weiteren Betrieb der Maschine bzw. des entsprechenden Geräts verwendet wird.

Es versteht sich, dass auch auf die Konfiguration mehrerer verschiedener potentieller Geräte rückgeschlossen werden kann und dass die Konfiguration mehrerer echter Geräte ausgelesen werden kann, um diese Rückschlüsse zu ziehen.

Insbesondere können nicht die Konfigurationen aller Geräte der Maschine ausgelesen werden. Stattdessen können nur die Konfigurationen eines Teils oder nur genau eines oder zweier Geräte der Maschine ausgelesen werden. Ebenfalls kann eine Neu-Konfiguration nur eines Teils oder nur genau eines Geräts oder nur von genau zwei Geräten der Maschine vorgenommen werden.

Der hierin verwendete Begriff der Konfiguration bezieht sich insbesondere auf Geräteparameter, die das Verhalten der Geräte der industriellen Maschine beeinflussen. Dies kann beispielsweise eine maximale Drehzahl eines Servomotors oder die Dauer einer Anlaufsperre sein. Unter dem Begriff Konfiguration sind zudem auch mögliche Geräteparameter bzw. abgeleitete Geräteparameter zu verstehen. Unter der Konfiguration ist insbesondere kein Ablaufprogramm zu verstehen.

Bei den separaten Geräten der Maschine kann es sich um funktional unterschiedliche Geräte handeln, die beispielsweise in separaten Gehäusen angeordnet sind. Die Geräte wirken bevorzugt zusammen, um die Funktion der industriellen Maschine zu erfüllen.

Weiterbildungen der Erfindung sind der Beschreibung, den Zeichnungen sowie den Unteransprüchen zu entnehmen.

Gemäß einer ersten Ausführungsform wird bei der Neu-Konfiguration eine Überprüfung durchgeführt, ob die Neu-Konfiguration mit der Konfiguration des potentiellen Geräts kompatibel ist. Hierbei kann beispielsweise überprüft werden, ob eine bei der Neu-Konfiguration des ersten Geräts geänderte Datenrate von dem potentiellen Gerät überhaupt geliefert oder empfangen werden kann. Hierdurch ergibt sich der Vorteil, dass nicht unwissentlich eine inkompatible Datenrate eingestellt wird, was herkömmlicherweise erst durch das Auslesen der Konfiguration des potentiellen Geräts festgestellt werden kann.

Gemäß einer weiteren Ausführungsform wird die Konfiguration von zumindest einem zweiten Gerät ausgelesen, wobei auch aus der Konfiguration des zweiten Geräts auf zumindest einen Teil der Konfiguration des potentiellen Geräts rückgeschlossen wird und die Konfiguration des potentiellen Geräts ergänzt wird, sofern möglich. Auch bei dem zweiten Gerät kann es sich um ein tatsächlich in der industriellen Maschine vorhandenes Gerät handeln, von welchem die Konfiguration vorliegt. Kommuniziert auch das zweite Gerät beim Betrieb der industriellen Maschine mit dem potentiellen Gerät oder ist auf andere Art und Weise mit dem potentiellen Gerät gekoppelt, so können auch aus der Konfiguration des zweiten Geräts Rückschlüsse auf die Konfiguration des potentiellen Geräts gezogen werden. Kommuniziert das zweite Gerät beispielsweise mit einer weiteren Datenrate mit dem potentiellen Gerät, so kann die Konfiguration des potentiellen Geräts um diese weitere Datenrate ergänzt werden. Zudem ist es möglich, z.B. festzustellen, dass das zweite Gerät die Netzwerkadresse des potentiellen Geräts bestätigt. Dies kann in dem Konfigurationssystem vermerkt oder gespeichert werden.

Generell kann die Konfiguration des potentiellen Geräts dynamisch ergänzt werden, sobald sich die Möglichkeit zum weiteren Rückschließen auf die Konfiguration des potentiellen Geräts ergibt.

Gemäß einer weiteren Ausführungsform werden Widersprüche beim Rückschließen auf die Konfiguration des potentiellen Geräts, die sich aus der Konfiguration des ersten und zweiten Geräts ergeben, ausgegeben. So kann die Konfiguration des ersten Geräts darauf hindeuten, dass das potentielle Gerät eine erste Netzwerkadresse verwenden müsste. Aus der Konfiguration des zweiten Geräts kann aber dann rückgeschlossen werden, dass das potentielle Gerät eigentlich eine zweite Netzwerkadresse verwenden müsste oder verwendet. Dieser Widerspruch kann einem Benutzer angezeigt werden, so dass der Benutzer dann geeignete Maßnahmen ergreifen kann.

Gemäß einer weiteren Ausführungsform wird bei einer Neu-Konfiguration, bei welcher nicht überprüft werden kann, ob die Neu-Konfiguration mit der Konfiguration des potentiellen Geräts kompatibel ist, eine Warnung ausgegeben. Bevorzugt wird der Benutzer um eine Bestätigung der Neu-Konfiguration gebeten. Der Fall, dass eine Neu-Konfiguration nicht auf Kompatibilität mit der Konfiguration des potentiellen Geräts überprüft werden kann, kann insbesondere dann eintreten, wenn die Konfiguration des potentiellen Geräts noch nicht vollständig bekannt ist. Beispielsweise kann der Benutzer eine Safety-ID bei der Neu-Konfiguration des ersten Geräts eingeben, wobei noch nicht festgestellt werden kann, ob das potentielle Gerät tatsächlich die eingegebene Safety-ID verwendet. In diesem Fall kann der Benutzer darauf hingewiesen werden, wobei der Benutzer dann beispielsweise aktiv bestätigen kann, dass die bei der Neu-Konfiguration eingegebene Safety-ID tatsächlich verwendet werden soll.

Gemäß einer weiteren Ausführungsform erfolgt das Auslesen der Konfiguration des ersten Geräts aus dem ersten Gerät selbst und/oder aus einer Gerätekonfigurationsdatei. Selbiges gilt entsprechend für das zweite Gerät und jedes weitere Gerät, für welches die Konfiguration ausgelesen wird.

Die Konfiguration des ersten Geräts kann beispielsweise von dem ersten Gerät selbst abgefragt werden, insbesondere über eine Datenverbindung. Ebenfalls ist es möglich, dass die Konfiguration aus einer Gerätekonfigurationsdatei ausgelesen wird, wobei die Gerätekonfigurationsdatei entweder in dem Gerät selbst oder auch in einer separaten Speichereinrichtung gespeichert sein kann. Insbesondere kann die Gerätekonfigurationsdatei in einer von der Maschine separaten Datenverarbeitungsanlage gespeichert sein.

Bei einer weiteren Ausführungsform wird auch eine Neu-Konfiguration des potentiellen Geräts vorgenommen, wobei die Neu-Konfiguration des potentiellen Geräts bevorzugt erst dann an das potentielle Gerät übertragen wird, wenn das potentielle Gerät mit dem Konfigurationssystem verbunden wird. Durch die Neu-Konfiguration des potentiellen Geräts können auch Konfigurationsveränderungen vorgenommen werden, die von dem potentiellen Gerät abhängen. So kann zum Beispiel die Netzwerkadresse des potentiellen Geräts geändert werden, woraufhin, insbesondere automatisch, die Konfiguration des ersten und/oder zweiten Geräts an die neue Netzwerkadresse des potentiellen Geräts angepasst wird. Die Neu-Konfiguration des potentiellen Geräts kann auch durch externe Systeme (d.h. nicht durch das Konfigurationssystem) erfolgen. Die Neu-Konfiguration des potentiellen Geräts erfolgt insbesondere automatisch, bevorzugt sobald diese möglich ist.

Gemäß einer weiteren Ausführungsform wird ein potentielles Gerät nicht mehr als potentielles Gerät angesehen, sobald die Konfiguration des potentiellen Geräts ausgelesen wird oder werden kann. Anders ausgedrückt, wird das potentielle Gerät dann in der Projektdatei des Konfigurationssystems durch ein "echtes" Gerät ersetzt. Hierbei kann durch das Konfigurationssystem beispielsweise die Gerätekonfigurationsdatei geöffnet werden oder eine tatsächliche Datenverbindung zwischen dem Konfigurationssystem und dem potentiellen Gerät hergestellt werden. Das potentielle Gerät wird dann als echtes Gerät geführt, wodurch wiederum Rückschlüsse auf andere potentielle Geräte erfolgen können.

Gemäß einer weiteren Ausführungsform wird die Konfiguration des potentiellen Geräts verwendet, um ein das potentielle Gerät ersetzendes neues Gerät zumindest zum Teil zu konfigurieren. Die Konfiguration des potentiellen Geräts kann also dazu dienen, ein Ersatzgerät (d.h. das neue Gerät) zumindest zum Teil zu konfigurieren, um Arbeitsaufwand für eine vollständige Konfiguration einzusparen. Ein solches Vorgehen kann insbesondere dann vorteilhaft sein, wenn das potentielle Gerät defekt ist und auch die Gerätekonfigurationsdatei des potentiellen Geräts nicht mehr vorhanden ist oder nicht mehr aufgefunden werden kann. Das potentielle Gerät muss dann durch das neue Gerät ersetzt werden, wobei das neue Gerät idealerweise mit der identischen Konfiguration des defekten Geräts betrieben werden sollte. Das neue Gerät kann aus einem Katalog von Gerätetypen ausgewählt werden, wobei die Gerätetypen das defekte Gerät ersetzen können. Nachdem durch das Rückschließen auf die Konfiguration des potentiellen Geräts bereits Teile dieser Konfiguration bekannt sind, kann dieser Teil der Konfiguration weiterverwendet werden. Die Konfiguration muss dementsprechend nicht komplett neu erstellt werden.

Gemäß einer weiteren Ausführungsform sind in Metadaten der Konfiguration des ersten Geräts Informationen über die Konfiguration des potentiellen Geräts gespeichert. Die Metadaten in der Konfiguration des ersten Geräts können insbesondere bei einer initialen Konfiguration der industriellen Maschine erzeugt und gespeichert werden und Informationen über die Konfiguration der weiteren Geräte der Maschine umfassen. Dementsprechend enthalten die Metadaten Informationen über die Konfiguration des potentiellen Geräts. Die Metadaten können das Ableiten der Konfiguration des potentiellen Geräts deutlich erleichtern. Insbesondere können die Metadaten in mehreren Geräten der Maschine vorhanden sein. Die Metadaten ändern die benutzte Konfiguration der Geräte nicht.

Gemäß einer Ausführungsform sind die Geräte der Maschine über einen Ethernetbasierten Bus, insbesondere einen Feldbus, miteinander verbunden. Die Geräte tauschen bevorzugt Daten über den Bus aus. Beispielsweise kann eine Steuerung der Maschine Befehle an Aktoren senden und Messwerte von Sensoren empfangen. Insbesondere betrifft die abgeleitete Konfiguration bzw. die Konfiguration des potentiellen Geräts auf die rückgeschlossen wurde, für den Bus relevante Einstellungen der Geräte. Die Konfiguration kann dementsprechend eine Datenrate, eine Safety-ID, eine Netzwerkadresse oder IP-Adresse umfassen oder aus den genannten Informationen bestehen.

Die abgeleitete Konfiguration kann aber auch losgelöst von dem Bus sein. So kann beispielsweise über mechanische oder thermische Zusammenhänge auf die Konfiguration des potentiellen Geräts geschlossen werden. Beispielsweise lässt die Kopplung über ein Getriebe mit einer vorbestimmten Übersetzung auf eine maximale Drehzahl eines potentiellen Geräts schließen, welches über das Getriebe mit dem ersten Gerät gekoppelt ist, wobei das erste Gerät und das potentielle Gerät beispielsweise als Motoren ausgebildet sein können. Auch ist es möglich, beispielsweise von der Maximaltemperatur eines Ofens auf die Konfiguration eines Messbereichs eines als Temperatursensor ausgebildeten Geräts zu schließen.

Gemäß einer Ausführungsform ist das erste Gerät und/oder das potentielle Gerät ein Laserscanner, ein Servomotor mit Steuerung, eine speicherprogrammierbare Steuerung (SPS) oder ein Temperatursensor.

Gemäß einer weiteren Ausführungsform wird aus einer Datenübertragungsrate des ersten Geräts auf eine Datenübertragungsrate des potentiellen Geräts rückgeschlossen. Alternativ oder zusätzlich wird aus einer Zieladresse des ersten Geräts auf eine Netzwerkadresse des potentiellen Geräts rückgeschlossen.

Gemäß einer weiteren Ausführungsform umfasst das Konfigurationssystem eine graphische Benutzeroberfläche (GUI), welche die Konfiguration zumindest des ersten Geräts und/oder des potentiellen Geräts zumindest zum Teil darstellt. Die Benutzeroberfläche kann die Konfigurationen des ersten Geräts und des potentiellen Geräts auf übersichtliche Art und Weise darstellen und dem Benutzer die Konfiguration so erleichtern. Insbesondere kann die Benutzeroberfläche eine graphische Repräsentation von Abhängigkeiten umfassen, d.h. anzeigen, welches Gerät mit welchem kommuniziert. Insbesondere kann in der Benutzeroberfläche das potentielle Gerät auch gekennzeichnet sein, beispielsweise durch eine gestrichelte Darstellung des potentiellen Geräts. Mit der Benutzeroberfläche ist es auch möglich, Konflikte oder Warnungen und dergleichen auszugeben oder den Benutzer um Bestätigung von Konfigurationseinstellungen zu bitten.

Die Erfindung betrifft weiterhin ein elektronisches Konfigurationssystem zur Konfiguration zumindest eines Geräts einer industriellen Maschine gemäß Anspruch 13.

Schließlich betrifft die Erfindung auch ein System umfassend zumindest ein elektronisches Konfigurationssystem der oben erläuterten Art und zumindest eine industrielle Maschine mit zumindest zwei separaten Geräten.

Die Ausführungen zum erfindungsgemäßen Verfahren gelten für das erfindungsgemäße Konfigurationssystem und das erfindungsgemäße System entsprechend. Dies gilt insbesondere für Vorteile und bevorzugte Ausführungsformen.

Nachfolgend wird die Erfindung rein beispielhaft unter Bezugnahme auf die Zeichnungen beschrieben. Es zeigen:
- Fig. 1: eine Maschine in schematischer Darstellung;
- Fig. 2: die schematische Konfiguration der Geräte der Maschine in einem Ursprungszustand;
- Fig. 3: das Rückschließen auf eine Konfiguration eines potentiellen Geräts;
- Fig. 4: das Ergänzen der Konfiguration des potentiellen Geräts;

- Fig. 5: das Ändern der Konfiguration eines Geräts;
- Fig. 6: das Abfragen einer Bestätigung eines Benutzers;
- Fig. 7: das Anpassen der Konfiguration des potentiellen Geräts;
- Fig. 8: die Visualisierung von widersprechenden Informationen über die Konfiguration des potentiellen Geräts.

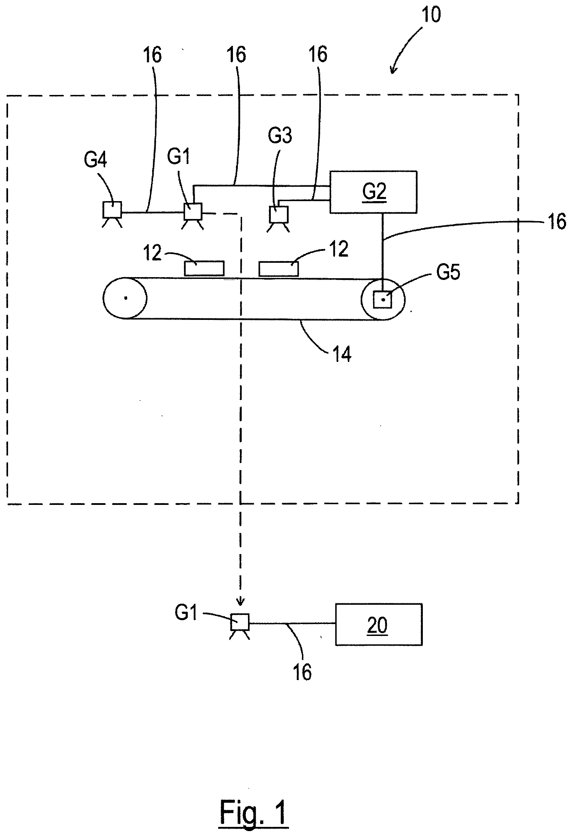

Fig. 1 zeigt eine industrielle Maschine 10, welche Pakete 12 auf einem Förderband 14 transportiert.

Ein auf den Paketen 12 angebrachter Barcode (nicht gezeigt) wird mittels eines ersten Geräts in Form eines ersten Scanners G1 erfasst, wobei dem ersten Scanner G1 ein weiterer Scanner G4 vorgeschaltet ist.

Ein weiteres Gerät in Form eines Tiefensensors G3 erfasst eine Höhe der Pakete 12. Sowohl der erste Scanner G1 als auch der Tiefensensor G3 sind über einen Feldbus 16 mit einer speicherprogrammierbaren Steuerung (SPS) G2 gekoppelt. Die SPS G2 ist zudem über den Feldbus 16 mit einem weiteren Gerät in Form eines Antriebsmotors G5 verbunden. Der Antriebsmotor G5 treibt das Förderband 14 an. Schließlich ist der erste Scanner G1 auch über den Feldbus 16 mit dem weiteren Scanner G4 verbunden.

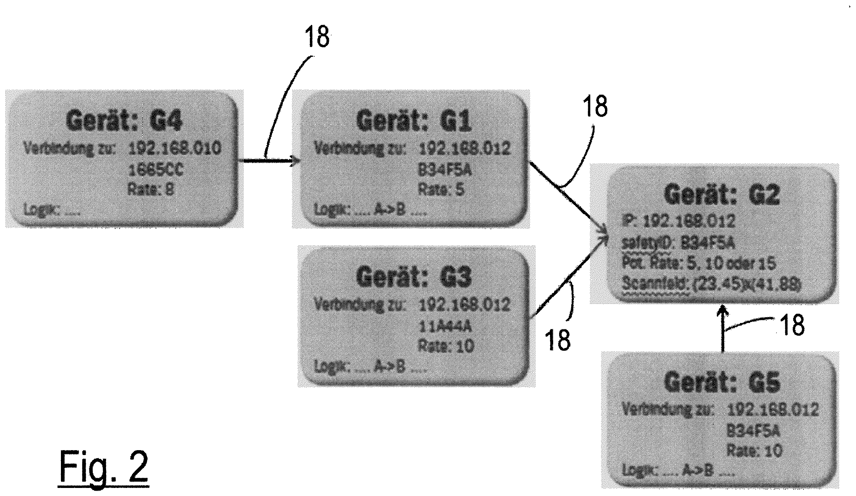

Um die Maschine 10 ursprünglich in Betrieb zu nehmen, wurde eine ursprüngliche Konfiguration erstellt. Die ursprüngliche Konfiguration der Maschine 10 ist in Fig. 2 gezeigt. Die in Fig. 2 dargestellten Pfeile 18 geben jeweils eine Datenkommunikation von einem Gerät zum nächsten an. Beispielsweise übermittelt der weitere Scanner G4 Daten an den ersten Scanner G1.

Nun ist in Fig. 1 ein Servicefall angedeutet, bei welchem die Konfiguration des ersten Scanners G1 verändert werden soll, d.h. es soll eine Neu-Konfiguration des ersten Geräts durchgeführt werden. Zu diesem Zweck wird das erste Gerät, d.h. der erste Scanner G1 mit einem Konfigurationssystem 20 über den Feldbus 16 verbunden und hierfür optional aus der Maschine 10 ausgebaut.

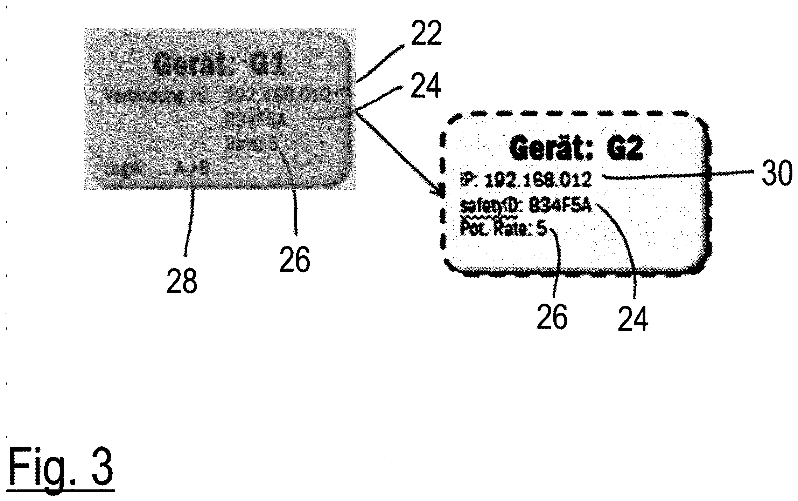

Das Konfigurationssystem 20 liest dann die Konfiguration des ersten Scanners G1 aus diesem aus und zeigt die Konfiguration des ersten Scanners G1 in einer graphischen Benutzeroberfläche in einem neuen Projekt an, wie dies in Fig. 3 dargestellt ist.

Das Konfigurationssystem 20 kann insbesondere ein Kommunikationsziel 22 (hier die Netzwerkadresse 192.168.012) angeben. Überdies werden eine Safety-ID 24 (hier: B34F5A) und eine Datenrate 26 (hier: 5) des Kommunikationsziels 22 dargestellt. Schließlich existieren weitere Konfigurationen für den ersten Scanner G1, wie z.B. eine Logikverknüpfung 28 (hier: A->B), welche angegeben bzw. dargestellt wird.

Aus der so ausgelesenen Konfiguration des ersten Scanners G1 lassen sich Rückschlüsse auf ein potentielles Gerät (d.h. das Kommunikationsziel) ziehen, welches in der Maschine 10 vorhanden ist, zu welchem das Konfigurationssystem 20 allerdings keine Konfiguration auslesen kann oder zu welchem das Konfigurationssystem 20 keine Konfigurationsdaten vorliegen hat. In dem in Fig. 3 gezeigten Beispiel ist das potentielle Gerät die SPS G2.

Aus der Konfiguration des ersten Scanners G1 lässt sich für das potentielle Gerät, d.h. für die SPS G2, zumindest ein Teil der Konfiguration der SPS G2 ableiten. So kann rückgeschlossen werden, dass die SPS G2 eine Netzwerkadresse 30 mit dem Wert 192.168.012, eine Safety-ID 24 mit dem Wert B34F5A und zumindest eine Datenrate 26 von "5" aufweist.

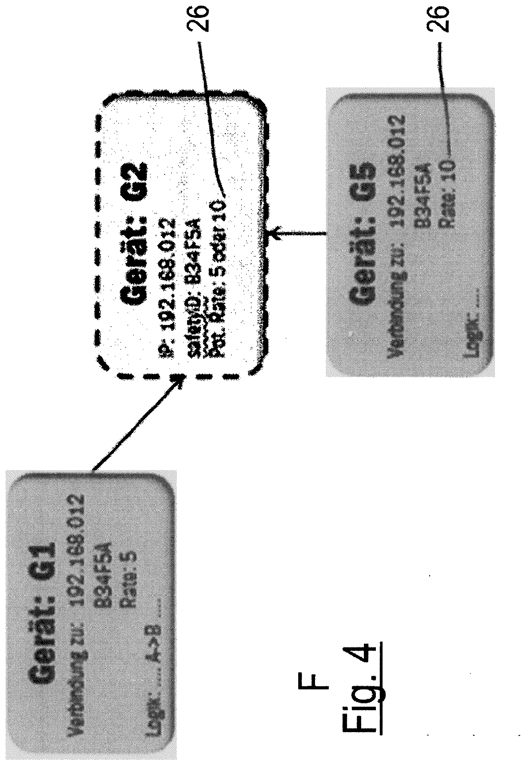

Fig. 4 zeigt das Heranziehen der Konfiguration eines weiteren Geräts zur Bestimmung der Konfiguration der SPS G2. Gemäß Fig. 4 wird der Antriebsmotor G5 ebenfalls mit dem Konfigurationssystem 20 gekoppelt oder zumindest eine Gerätekonfigurationsdatei des Antriebsmotors G5 dem Konfigurationssystem 20 zur Verfügung gestellt. Der Antriebsmotor G5 sendet ebenfalls Daten an die SPS G2, wobei dies allerdings mit einer Datenrate 26 von "10" erfolgt. Das Konfigurationssystem 20 ergänzt daraufhin die rückgeschlossene Konfiguration der SPS G2 um die zusätzliche potentielle Datenrate 26 von "10".

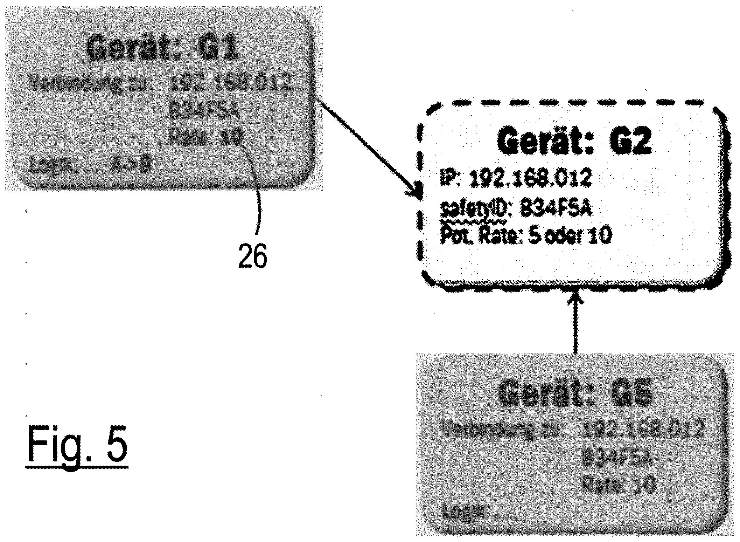

Ändert nun der Benutzer die Datenrate in der Konfiguration des ersten Scanners G1 von "5" auf "10" (siehe Fig. 5), so führt das Konfigurationssystem 20 eine Überprüfung durch, ob die neu eingegebene Datenrate 26 mit den Datenraten der SPS G2 kompatibel ist. Dies ist der Fall, da anhand der Konfiguration des Antriebsmotors G5 festgestellt werden kann, dass die SPS G2 auch eine Datenrate 26 von "10" unterstützt.

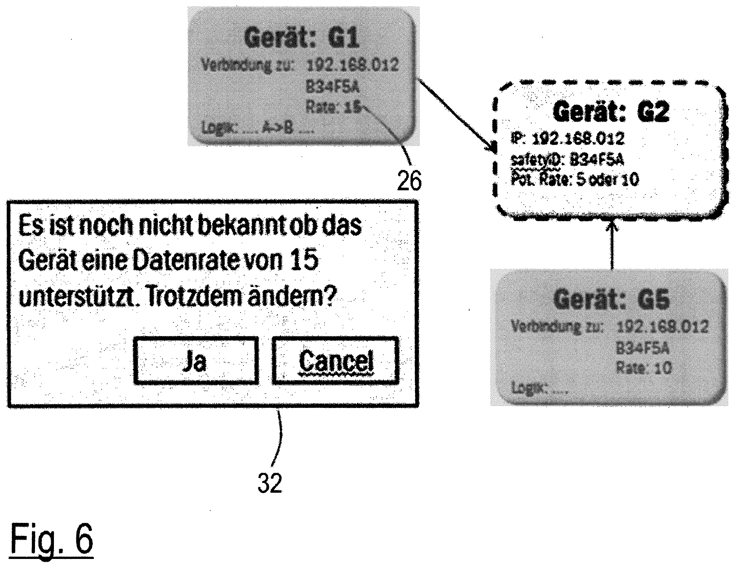

Ändert der Benutzer die Datenrate 26 des ersten Scanners G1 allerdings auf einen Wert von "15", wie in Fig. 6 dargestellt, so kann das Konfigurationssystem 20 in seiner Benutzeroberfläche einen Bestätigungsdialog 32 anzeigen, der den Benutzer auffordert, die Datenrate 26 von "15" zu bestätigen, weil für die SPS G2 nicht bekannt ist, ob diese Datenrate 26 tatsächlich unterstützt wird.

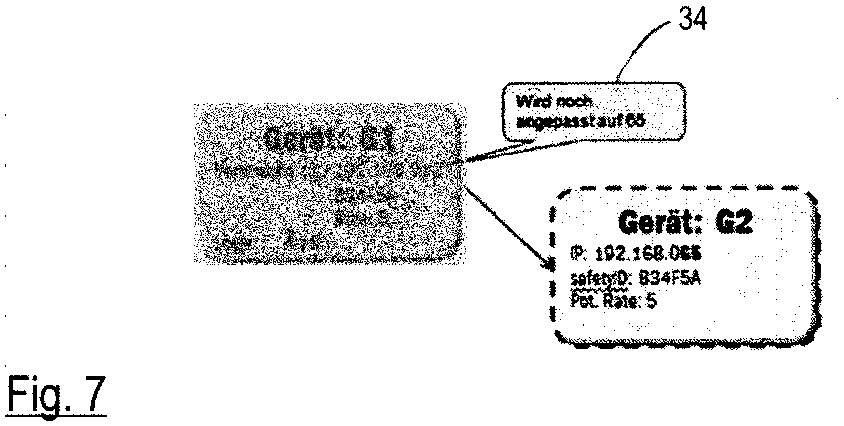

Fig. 7 zeigt die Änderung der Konfiguration des potentiellen Geräts, d.h. der SPS G2. Der Benutzer hat in Fig. 7 die Netzwerkadresse 30 der SPS G2 geändert. Diese Änderung muss dann auch in dem ersten Scanner G1 nachgezogen werden, was von dem Konfigurationssystem 20 mittels eines Hinweises 34 angezeigt wird. Alternativ wird die Änderung bezüglich des ersten Scanners G1 von dem Konfigurationssystem 20 automatisch angepasst. Die Änderung der Konfiguration des ersten Scanners G1 als auch der SPS G2 erfolgt bevorzugt dann, wenn beide Geräte G1, G2 mit dem Konfigurationssystem 20 gekoppelt sind.

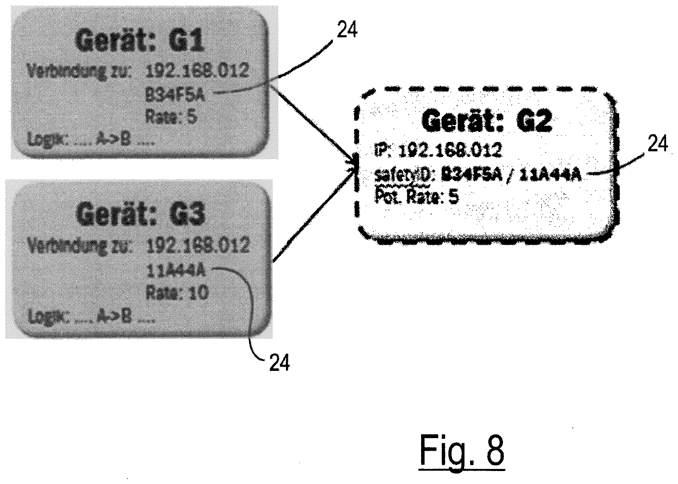

Schließlich ist in Fig. 8 ein Widerspruch dargestellt. So lässt sich aus der Konfiguration des ersten Scanners G1 schließen, dass die SPS G2 eine Safety-ID 24 mit dem Wert B34F5A besitzt, wohingegen der Tiefensensor G3 angibt, dass die SPS G2 eine Safety-ID 24 mit dem Wert 11A44A aufweist. Diese widersprüchlichen Angaben stellt das Konfigurationssystem 20 in der Darstellung der SPS G2 dar, so dass der Benutzer diesen Widerspruch durch geeignete Maßnahmen auflösen kann.

Nachdem der Benutzer eine Änderung der Konfiguration des ersten Scanners G1 vorgenommen hat, d.h. eine Neu-Konfiguration der Maschine erstellt hat, wie z.B. in Fig. 5 gezeigt, so wird die Neu-Konfiguration von dem Konfigurationssystem 20 an den ersten Scanner G1 übertragen. Anschließend wird der neu konfigurierte erste Scanner G1 wieder in die Maschine 10 verbaut und dort mit der neuen Konfiguration verwendet. Das Risiko einer Fehl-Konfiguration oder einer inkompatiblen Konfiguration wird durch das hierin beschriebene Vorgehen deutlich verringert. Zudem wird der Arbeitsaufwand verringert, da nur von einem kleinen Teil der Geräte G1, G2, G3, G4, G5 die Konfiguration tatsächlich bekannt sein muss, um eine korrekte Neu-Konfiguration der Maschine bzw. des ersten Scanners G1 vornehmen zu können.

### Bezuqszeichenliste

- G1: erster Scanner
- G2: SPS
- G3: Tiefensensor
- G4: weiterer Scanner
- G5: Antriebsmotor

- 10: Maschine
- 12: Paket
- 14: Förderband
- 16: Feldbus
- 18: Datenkommunikation
- 20: Konfigurationssystem
- 22: Kommunikationsziel
- 24: Safety-ID
- 26: Datenrate
- 28: Logikverknüpfung
- 30: Netzwerkadresse
- 32: Bestätigungsdialog
- 34: Hinweis

## Patentansprüche

1. Verfahren zur Konfiguration zumindest eines Geräts (G1, G2, G3, G4, G5) einer industriellen Maschine (10), wobei die Maschine (10) mehrere separate Geräte (G1, G2, G3, G4, G5), beispielsweise Feldgeräte, speicherprogrammierbare Steuerungen (SPS) und/oder Feldbusse, umfasst,
wobei mittels eines elektronischen Konfigurationssystems (20)
- eine Konfiguration zumindest eines ersten Geräts (G1) ausgelesen wird, wobei das erste Gerät (G1) in der industriellen Maschine (10) vorhanden und mit dem Konfigurationssystem (20) verbunden ist, das Verfahren **gekennzeichnet dadurch, dass**
- aus der Konfiguration des ersten Geräts (G1) auf zumindest einen Teil einer Konfiguration eines potentiellen Geräts (G2), dessen Konfiguration nicht ausgelesen wurde, rückgeschlossen wird, wobei eine Verbindung zwischen dem ersten Gerät (G1) und dem potentiellen Gerät (G2) vorgesehen ist, wobei das potentielle Gerät (G2) real existiert und in der industriellen Maschine (10) vorhanden ist, für das elektronische Konfigurationssystem (20) aber nicht sichtbar ist,
- eine Neu-Konfiguration des ersten Geräts (G1) durchgeführt wird, wobei die Konfiguration des potentiellen Geräts (G2) bei der Neu-Konfiguration berücksichtigt wird,
- die Neu-Konfiguration an die Maschine (10) übertragen wird.

2. Verfahren nach Anspruch 1,
wobei bei der Neu-Konfiguration eine Überprüfung durchgeführt wird, ob die Neu-Konfiguration mit der Konfiguration des potentiellen Geräts (G2) kompatibel ist.

3. Verfahren nach Anspruch 1 oder 2,
wobei die Konfiguration von zumindest einem zweiten Gerät (G5) ausgelesen wird, wobei auch aus der Konfiguration des zweiten Geräts (G5) auf zumindest einen Teil der Konfiguration des potentiellen Geräts rückgeschlossen wird und die Konfiguration des potentiellen Geräts ergänzt wird, sofern möglich.

4. Verfahren nach Anspruch 3,
wobei Widersprüche beim Rückschließen auf die Konfiguration des potentiellen Geräts (G2), die sich aus der Konfiguration des ersten und zweiten Geräts (G1, G5) ergeben, ausgegeben werden.

5. Verfahren nach zumindest einem der vorstehenden Ansprüche,
wobei bei einer Neu-Konfiguration, bei welcher nicht überprüft werden kann, ob die Neu-Konfiguration mit der Konfiguration des potentiellen Geräts (G2) kompatibel ist, eine Warnung ausgegeben wird und bevorzugt der Benutzer um eine Bestätigung der Neu-Konfiguration gebeten wird.

6. Verfahren nach zumindest einem der vorstehenden Ansprüche,
wobei das Auslesen der Konfiguration des ersten Geräts (G1) aus dem Gerät selbst und/oder aus einer Gerätekonfigurationsdatei erfolgt.

7. Verfahren nach zumindest einem der vorstehenden Ansprüche,
wobei auch eine Neu-Konfiguration des potentiellen Geräts (G2) vorgenommen wird, wobei die Neu-Konfiguration des potentiellen Geräts (G2) bevorzugt dann auf das potentielle Gerät (G2) übertragen wird, wenn das potentielle Gerät mit dem Konfigurationssystem verbunden wird.

8. Verfahren nach zumindest einem der vorstehenden Ansprüche,
wobei die Konfiguration des potentiellen Geräts (G2) verwendet wird, um ein das potentielle Gerät (G2) ersetzendes neues Gerät zumindest zum Teil zu konfigurieren.

9. Verfahren nach zumindest einem der vorstehenden Ansprüche,
wobei in Metadaten der Konfiguration des ersten Geräts (G1) Informationen über die Konfiguration des potentiellen Geräts (G2) gespeichert sind.

10. Verfahren nach zumindest einem der vorstehenden Ansprüche,
wobei die Geräte (G1, G2, G3, G4, G5) der Maschine über einen Ethernetbasierten Bus, insbesondere einen Feldbus (16), miteinander verbunden sind.

11. Verfahren nach zumindest einem der vorstehenden Ansprüche,
wobei aus einer Datenübertragungsrate (26) des ersten Geräts (G1) auf eine Datenübertragungsrate (26) des potentiellen Geräts (G2) rückgeschlossen wird,
und/oder wobei aus einem Kommunikationsziel (22) des ersten Geräts auf eine Netzwerkadresse (30) des potentiellen Geräts (G2) rückgeschlossen wird.

12. Verfahren nach zumindest einem der vorstehenden Ansprüche,
wobei das Konfigurationssystem (20) eine grafische Benutzeroberfläche (GUI) umfasst, welche die Konfiguration zumindest des ersten Geräts (G1) und/oder des potentiellen Geräts (G2) zumindest zum Teil darstellt.

13. Elektronisches Konfigurationssystem (20) zur Konfiguration zumindest eines Geräts (G1, G2, G3, G4, G5) einer industriellen Maschine (10), wobei die Maschine (10) mehrere separate Geräte (G1, G2, G3, G4, G5), beispielsweise Feldgeräte, speicherprogrammierbare Steuerungen (SPS) und/oder Feldbusse, umfasst,
wobei das Konfigurationssystem (20) ausgebildet ist,
- eine Konfiguration zumindest eines ersten Geräts (G1) auszulesen, wobei das erste Gerät (G1) in der industriellen Maschine (10) vorhanden und mit dem Konfigurationssystem (20) verbunden ist, das Konfigurationssystem **dadurch gekennzeichnet, dass** das Konfigurationssystem ausgebildet ist,
- aus der Konfiguration des ersten Geräts (G1) auf zumindest einen Teil einer Konfiguration eines potentiellen Geräts (G2), dessen Konfiguration nicht ausgelesen wurde, rückzuschließen, wobei eine Verbindung zwischen dem ersten Gerät (G1) und dem potentiellen Gerät (G2) vorgesehen ist, wobei das potentielle Gerät (G2) real existiert und in der industriellen Maschine (10) vorhanden ist, für das elektronische Konfigurationssystem (20) aber nicht sichtbar ist,
- eine Neu-Konfiguration des ersten Geräts (G1) durchzuführen, wobei die Konfiguration des potentiellen Geräts (G2) bei der Neu-Konfiguration berücksichtigt wird,
- die Neu-Konfiguration an die Maschine (10) zu übertragen.

14. System umfassend zumindest ein elektronisches Konfigurationssystem (20) gemäß Anspruch 13 und zumindest eine industrielle Maschine (10) mit zumindest zwei separaten Geräten (G1, G2, G3, G4, G5).

## Claims

1. A method of configuring at least one device (G1, G2, G3, G4, G5) of an industrial machine (10), wherein the machine (10) comprises a plurality of separate devices (G1, G2, G3, G4, G5), for example field devices, programmable logic controllers (PLCs) and/or field buses, wherein, by means of an electronic configuration system (20),
- a configuration of at least a first device (G1) is read out, wherein the first device (G1) is present in the industrial machine (10) and is connected to the configuration system (20), the method being **characterized in that**
- at least a part of a configuration of a potential device (G2), whose configuration has not been read out, is concluded from the configuration of the first device (G1), wherein a connection is provided between the first device (G1) and the potential device (G2), wherein the potential device (G2) really exists and is present in the industrial machine (10), but is not visible to the electronic configuration system (20),
- a reconfiguration of the first device (G1) is performed, wherein the configuration of the potential device (G2) is taken into account in the reconfiguration, and
- the reconfiguration is transmitted to the machine (10).

2. A method in accordance with claim 1,
wherein, during the reconfiguration, a check is performed whether the reconfiguration is compatible with the configuration of the potential device (G2).

3. A method in accordance with claim 1 or claim 2,
wherein the configuration of at least a second device (G5) is read out,
wherein at least a part of the configuration of the potential device is also concluded from the configuration of the second device (G5) and the configuration of the potential device is supplemented, if possible.

4. A method in accordance with claim 3,
wherein contradictions, which result from the configuration of the first and second devices (G1, G5), are output when concluding the configuration of the potential device (G2).

5. A method in accordance with at least one of the preceding claims,
wherein, on a reconfiguration during which it cannot be checked whether the reconfiguration is compatible with the configuration of the potential device (G2), a warning is output and the user is preferably asked for a confirmation of the reconfiguration.

6. A method in accordance with at least one of the preceding claims,
wherein the reading out of the configuration of the first device (G1) takes place from the device itself and/or from a device configuration file.

7. A method in accordance with at least one of the preceding claims,
wherein a reconfiguration of the potential device (G2) is also performed, wherein the reconfiguration of the potential device (G2) is preferably transmitted to the potential device (G2) when the potential device is connected to the configuration system.

8. A method in accordance with at least one of the preceding claims,
wherein the configuration of the potential device (G2) is used to at least partly configure a new device which replaces the potential device (G2).

9. A method in accordance with at least one of the preceding claims, wherein information on the configuration of the potential device (G2) is stored in metadata of the configuration of the first device (G1).

10. A method in accordance with at least one of the preceding claims,
wherein the devices (G1, G2, G3, G4, G5) of the machine are connected to one another via an Ethernet-based bus, in particular a field bus (16).

11. A method in accordance with at least one of the preceding claims,
wherein a data transmission rate (26) of the potential device (G2) is concluded from a data transmission rate (26) of the first device (G1), and/or wherein a network address (30) of the potential device (G2) is concluded from a communication destination (22) of the first device.

12. A method in accordance with at least one of the preceding claims,
wherein the configuration system (20) comprises a graphical user interface (GUI) which at least partly represents the configuration of at least the first device (G1) and/or of the potential device (G2).

13. An electronic configuration system (20) for configuring at least one device (G1, G2, G3, G4, G5) of an industrial machine (10), wherein the machine (10) comprises a plurality of separate devices (G1, G2, G3, G4, G5), for example field devices, programmable logic controllers (PLCs) and/or field buses,
wherein the configuration system (20) is configured
- to read out a configuration of at least a first device (G1), wherein the first device (G1) is present in the industrial machine (10) and is connected to the configuration system (20), the configuration system being **characterized in that** the configuration system is configured
- to conclude at least a part of a configuration of a potential device (G2), whose configuration has not been read out, from the configuration of the first device (G1), wherein a connection is provided between the first device (G1) and the potential device (G2), wherein the potential device (G2) really exists and is present in the industrial machine (10), but is not visible to the electronic configuration system (20),
- to perform a reconfiguration of the first device (G1), wherein the configuration of the potential device (G2) is taken into account in the reconfiguration, and
- to transmit the reconfiguration to the machine (10).

14. A system comprising at least one electronic configuration system (20) in accordance with claim 13, and at least one industrial machine (10) having at least two separate devices (G1, G2, G3, G4, G5).

## Revendications

1. Procédé pour configurer au moins un appareil (G1, G2, G3, G4, G5) d'une machine industrielle (10), dans lequel la machine (10) comprend plusieurs appareils séparés (G1, G2, G3, G4, G5), par exemple des appareils de terrain, des automates programmables industriels (API) et/ou des bus de terrain, et dans lequel un système de configuration électronique (20) permet
- de lire une configuration d'au moins un premier appareil (G1),
le premier appareil (G1) étant présent dans la machine industrielle (10) et étant connecté au système de configuration (20),
ledit procédé étant **caractérisé en ce que**
- à partir de la configuration du premier appareil (G1), on conclut à une partie au moins d'une configuration d'un appareil potentiel (G2) dont la configuration n'a pas été lue, une connexion étant prévue entre le premier appareil (G1) et l'appareil potentiel (G2), l'appareil potentiel (G2) existant réellement et étant présent dans la machine industrielle (10), mais n'étant pas visible pour le système de configuration électronique (20),
- on procède à une reconfiguration du premier appareil (G1), la configuration de l'appareil potentiel (G2) étant prise en compte dans la reconfiguration,
- la reconfiguration est transférée à la machine (10).

2. Procédé selon la revendication 1,
dans lequel, pendant la reconfiguration, on procède à une vérification pour savoir si la reconfiguration est compatible avec la configuration de l'appareil potentiel (G2).

3. Procédé selon la revendication 1 ou 2,
dans lequel la configuration d'au moins un second appareil (G5) est lue, et à partir de la configuration du second appareil (G5), on conclut également à une partie au moins de la configuration de l'appareil potentiel pour compléter, si possible, la configuration de l'appareil potentiel.

4. Procédé selon la revendication 3,
dans lequel des contradictions dans la conclusion quant à la configuration de l'appareil potentiel (G2), qui résultent de la configuration des premier et second appareils (G1, G5), sont émises.

5. Procédé selon l'une au moins des revendications précédentes,
dans lequel, lors d'une reconfiguration pour laquelle il n'est pas possible de vérifier si la reconfiguration est compatible avec la configuration de l'appareil potentiel (G2), un avertissement est émis et, de préférence, l'utilisateur est invité à confirmer la reconfiguration.

6. Procédé selon l'une au moins des revendications précédentes,
dans lequel la lecture de la configuration du premier appareil (G1) est effectuée à partir de l'appareil lui-même et/ou d'un fichier de configuration de l'appareil.

7. Procédé selon l'une au moins des revendications précédentes,
dans lequel on procède également à une reconfiguration de l'appareil potentiel (G2), la reconfiguration de l'appareil potentiel (G2) étant de préférence transférée à l'appareil potentiel (G2) lorsque l'appareil potentiel est connecté au système de configuration.

8. Procédé selon l'une au moins des revendications précédentes, dans lequel la configuration de l'appareil potentiel (G2) est utilisée pour configurer au moins en partie un nouvel appareil remplaçant l'appareil potentiel (G2).

9. Procédé selon l'une au moins des revendications précédentes,
dans lequel des informations concernant la configuration de l'appareil potentiel (G2) sont stockées dans les métadonnées de la configuration du premier appareil (G1).

10. Procédé selon l'une au moins des revendications précédentes,
dans lequel les appareils (G1, G2, G3, G4, G5) de la machine sont inter-connectés via un bus basé sur Ethernet, en particulier un bus de terrain (16).

11. Procédé selon l'une au moins des revendications précédentes,
dans lequel, à partir d'un débit de transfert de données (26) du premier appareil (G1), on conclut à un débit de transfert de données (26) de l'appareil potentiel (G2), et/ou
à partir d'une destination de communication (22) du premier appareil, on conclut à une adresse de réseau (30) de l'appareil potentiel (G2).

12. Procédé selon l'une au moins des revendications précédentes,
dans lequel le système de configuration (20) comprend une interface graphique (GUI) qui représente au moins en partie la configuration au moins du premier appareil (G1) et/ou de l'appareil potentiel (G2).

13. Système de configuration électronique (20) pour configurer au moins un appareil (G1, G2, G3, G4, G5) d'une machine industrielle (10), la machine (10) comprenant plusieurs appareils séparés (G1, G2, G3, G4, G5), par exemple des appareils de terrain, des automates programmables industriels (API) et/ou des bus de terrain,
le système de configuration (20) étant réalisé pour
- lire une configuration au moins d'un premier appareil (G1), le premier appareil (G1) étant présent dans la machine industrielle (10) et étant connecté au système de configuration (20),
le système de configuration étant **caractérisé en ce que** le système de configuration est réalisé pour
- conclure, à partir de la configuration du premier appareil (G1), à une partie au moins d'une configuration d'un appareil potentiel (G2) dont la configuration n'a pas été lue, une connexion étant prévue entre le premier appareil (G1) et l'appareil potentiel (G2), l'appareil potentiel (G2) existant réellement et étant présent dans la machine industrielle (10), mais n'état pas visible pour le système de configuration électronique (20),
- procéder à une reconfiguration du premier appareil (G1), la configuration de l'appareil potentiel (G2) étant prise en compte dans la reconfiguration,
- transférer la reconfiguration à la machine (10).

14. Système comprenant au moins un système de configuration électronique (20) selon la revendication 13 et au moins une machine industrielle (10) ayant au moins deux appareils séparés (G1, G2, G3, G4, G5).
